**Europäisches Patentamt**

**(19) European Patent Office**

**Office européen des brevets**

(11) Publication number : **0 404 927 B1**

## (12) EUROPEAN PATENT SPECIFICATION

(45) Date of publication of patent specification :
09.12.92 Bulletin 92/50

(21) Application number : 90902172.7

(22) Date of filing : 12.01.90

(86) International application number :
PCT/DK90/00011

(87) International publication number :
WO 90/07865 26.07.90 Gazette 90/17

(51) Int. Cl.⁵ : **A01B 49/06,** A01B 59/00,
A01C 7/00

(54) AGRICULTURAL MACHINE COMPRISING A HARROW AND SOW DEVICE.

(30) Priority : 13.01.89 DK 151/89

(43) Date of publication of application :
02.01.91 Bulletin 91/01

(45) Publication of the grant of the patent :
09.12.92 Bulletin 92/50

(84) Designated Contracting States :
BE DE FR GB SE

(56) References cited :
WO-A-86/03649
DE-A- 2 325 891
GB-A- 1 406 241
US-A- 4 432 292

(73) Proprietor : A/S DOUBLET-RECORD
Oerding
DK-7990 Oe. Assels (DK)

(72) Inventor : PETERSEN, Henning, Aage,
Westergaard
Oerding
DK-7990 Oe. Assels (DK)

(74) Representative : Nielsen, Leif et al
c/o Lehmann & Ree A/S Ryesgade 3
DK-8000 Aarhus C (DK)

Jouve, 18, rue Saint-Denis, 75001 PARIS

## Description

## BACKGROUND OF THE INVENTION

The present invention relates to an agricultural machine drawable by a tractor and comprising a harrow and sowing device preferably with a working width ranging from 4 to 8 metres where the sowing shares are mounted on the frame of the harrow section for sowing immediately behind the harrow section which sowing shares are fed by a pneumatic dosing device mounted at the rear of the harrow section in the immediate vicinity of the sowing shares.

Agricultural machines of this type are known from the practice, however, they are associated with several drawbacks. These drawbacks are associated with the way in which the two agricultural machines are mutually coupled and their mounting on the tractor. An other agricultural machine is known from international patent application published under No. WO 86/03649. This publication discloses a sowing machine being three-point suspended on the tractor. A storage container for the seeds is arranged above the harrow in a rather long distance from the tractor. Thus this machine has a limited storage capacity which depends on the lifting capacity of the tractor.

There exists two common ways of coupling the tractor and the agricultural machine. One way consists in mounting the coupling eyes of the machine in the three-point suspension of the tractor. This is described in the above-mentioned international patent application. This mounting causes the machine to be firmly connected to the tractor and to extend in almost direct continuation thereof. The machine can be lifted free of the soil for turning and transportation. When the machine is lowered to the soil in its working position this way of coupling renders that it difficult to turn the tractor as the machine is then forced around in or on the soil whereby large shearing forces are produced which, in many cases, the structure is not constructed to absorb.

The other way of coupling the tractor and the machine is carried out by means of a towing joint and a towing bar. This way of coupling causes the machine to be drawn behind the tractor and to follow the latter even during turning through sharp curves.

When an agricultural machine of the type mentioned above is three-point mounted the large working width of the harrow and the sowing machine will impose a very high load on the lifting system of the tractor when the tools are lifted free of the soil. Besides, it is necessary to mount very large counterweights on the front of the tractor in order to keep a weight distribution allowing secure steering. As it is desired to obtain the shortest possible transport distance for the material of seeds, the storage container is mounted immediately above the sowing shares. This causes the centre of gravity of the machine to be moved far towards the rear and therefore the requirements to the lifting capacity of the tractor are increased.

When an agricultural machine of the type mentioned above is towed, the set of implements becomes very long and therefore difficult to manoeuvre. If the storage container is dimensioned with a sufficient capacity in relation to the working width of the machine the harrow will become very heavy. Furthermore, the filling of such a storage tank mounted on top of the harrow will be difficult. Finally, a construction of this type substantially precludes a rearrangement for obtaining an acceptable transport and storage width.

The transport distance between the storage tank and the sowing shares has to be as short as possible in order for the machine to run through as short a distance as possible from the beginning of the dosing until dispensing of the seeds through the sowing shares. Therefore, the storage tank in which the pneumatic dosing device is mounted has to be placed in the immediate vicinity of the sowing shares.

The object of the present invention is to provide an agricultural machine of the type mentioned in the introductory part wherein the above-mentioned drawbacks are remedied.

According to the present invention this is achieved with an agricultural machine which is characterized in that the harrow section comprises a towing bar designed to be coupled to the tractor via a towing joint, that the storage tank of the sowing section is designed to be mounted in the three-point suspension of the tractor, and that the storage tank is connected to the dosing device via transport means of which at least a part extends approximately coaxially with or pivotally about a vertical axis through the towing joint of the towing bar.

Hereby an especially advantageous harrow and sowing device with an appropriate weight distribution is achieved and which is also easy to manoeuvre. As the storage tank is mounted in the three-point suspension of the tractor it is close to the tractor and is therefore able to contain a large quantity of seeds without demanding large counter-weights to maintain the weight distribution which gives a secure steering. Furthermore, the space occupied by the dosing device of the sowing section above the harrow section will be relatively limited and thus it is possible to fold the harrow and sowing device from its large working width to an acceptable transport and storage width.

The dividing performed between the dosing device and the storage tank of the sowing section necessitates the use of transport means for conveying seeds or the like from the storage tank to the dosing device. These transport means which usually comprise flexible hoses have to be made in such a way that they adapt themselves easily to the variations of length which, during turning, occur between the lift-mounted storage tank and the dosing device situated on the towed part of the machine. Therefore, at least a part of the transport means extends coaxially with or pivotally about a vertical axis through the towing joint of the towing bar. Variations of length of the transport means are hereby to a large extent avoided even during turning of the tractor through sharp curves. Thus it becomes easier to manoeuvre the agricultural machine. Furthermore, this will reduce the length of hoses forming part of the transport means and make the use of telescopic tubes unnecessary.

The agricultural machine according to the invention makes it possible to perform an advantageous dividing of the machine set so that the tractor carries one part of this set in the three-point suspension and so that the remaining part of the machine set is coupled to the tractor as a towed implement. It is noted that the towing joint may optionally be positioned in front of or behind the three-point suspended part of the machine set. However, it is preferred to mount the towing joint in front as it is hereby possible to use the ordinary towing joint of the tractor.

The harrow section and the sowing section will be able to be rearranged hydraulically from its working position to its transport position from the cabin of the tractor without preceding dismantling of the machine parts as space is provided above the central part of the machine for swinging up the wings.

## DESCRIPTION OF THE DRAWING

The invention will now be further explained with reference to the accompanying diagramatic drawing wherein,

Fig. 1 shows a side view of an agricultural machine according to the invention,

Fig. 2 shows a partial view of a part of the shown machine as seen from the side,

Fig. 3 shows a partial view corresponding to Fig. 2, but as seen from above,

Fig. 4 shows a partial side view for illustration of the mounting of the transport means of the machine, and

Fig. 5 shows a partial view as seen from above for illustration of a mutual turning movement between the various elements of the machine.

It is to be noted that the drawing illustrates only those parts of the agricultural machine which are necessary for explaining the present invention and that a functional agricultural machine therefore will comprise other elements than the ones shown and explained.

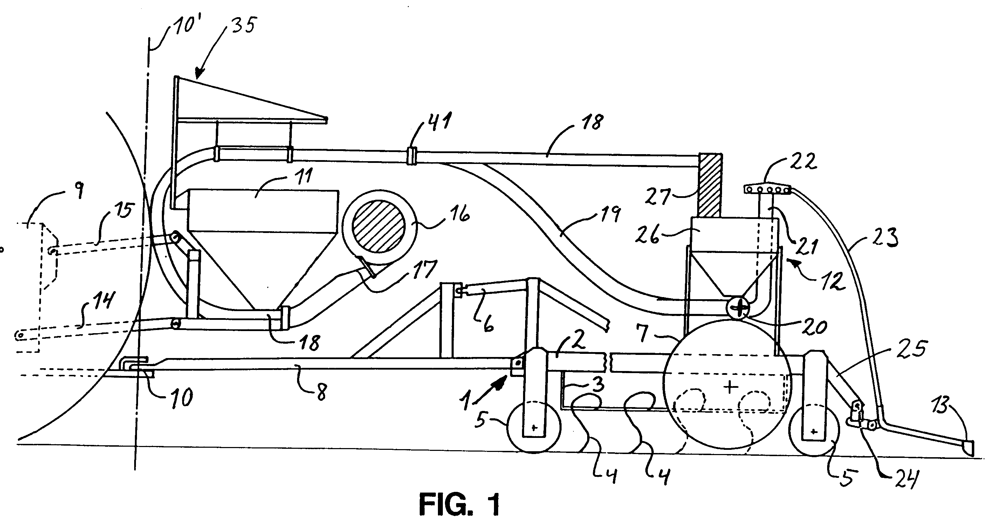

Fig. 1 shows an agricultural machine according to the invention. It comprises a towed harrow 1 having a two-piece frame constituted by a supporting frame 2 and a tool carrying frame 3 whereto harrow teeth 4 are secured. The supporting frame 2 is provided with supporting rolls 5. The harrow teeth 4 and the supporting rolls 5 which are illustrated in their working position may be lifted free of the soil hydraulically for transport as a cylinder 6 is connected to the transport wheels 7 of the harrow. The harrow 1 is, via a towing bar 8, connected to a tractor 9 through a towing joint 10 .

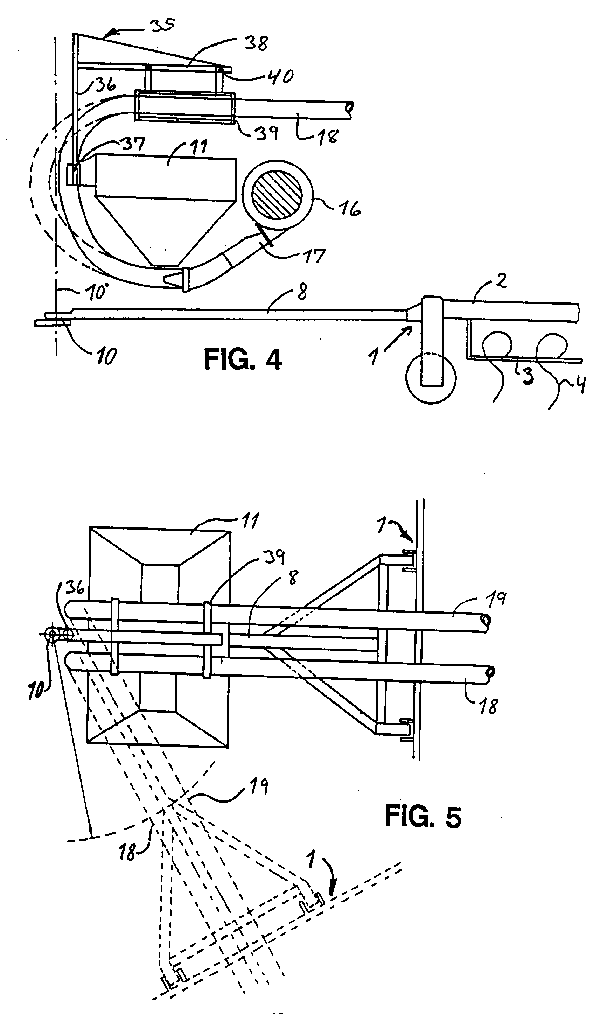

The sowing section of the machine comprises a storage tank 11, a dosing device 12, sowing shares 13, and transport means connecting the storage tank 11 to and the dosing device 12 for the transport of seeds from the storage tank 11 to the dosing device 12. The storage tank 11 is mounted in the three-point suspension of the tractor 9 through lifting arms 14 and a top bar 15. A high pressure blower 16 driven by the power take-off (not shown) of the tractor and delivering air through an air distibutor 17 is mounted on the storage tank 11. The air distributor is connected to a first flexible hose 18 where the air flow from the high pressure blower 16 intermittenly transports material from the storage tank 11 to the dosing device 12. This is explained in further detail below. The air distributor 17 is connected to another flexible hose 19 (see also Fig. 5) which delivers air continuously to a pneumatic dosing apparatus 20 of the dosing device 12. The pneumatic dosing apparatus 20 is of a type known per se which is provided with a vertical tube 21 opening into in a distributor head 22 which is connected through hoses 23 with each individual sowing share 13. The sowing shares 13 are mounted pivotally about an axis 24 mounted on the frame 2 of the harrow 1. The sowing shares are arranged to be hydraulically lifted free of the soil by means of cylinders 25 so that the machine may be used as a harrow only.

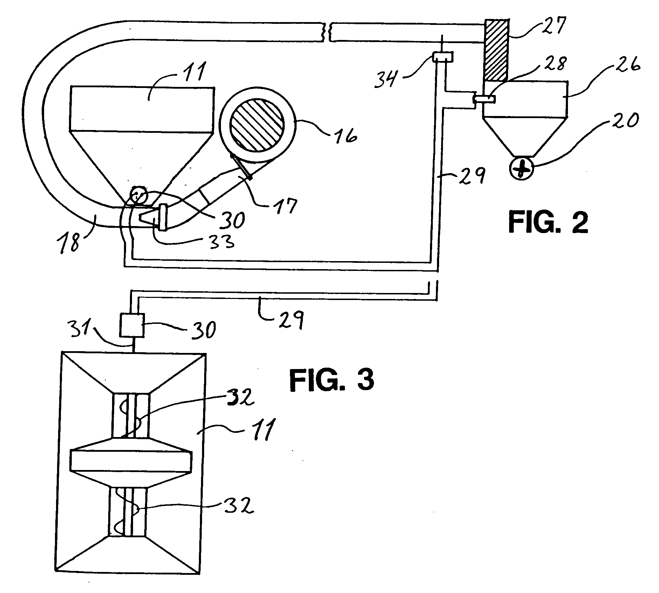

The dosing device 12 comprises a dosing tank 26 having a limited capacity and the purpose of which is to ensure only that the dosing apparatus is constantly supplied with material. The material is introduced into the dosing tank 26 through a cyclone 27 separating the pneumatically transported material. As it appears more clearly from Fig. 2, a level sensor 28 is mounted inside the dosing tank 26. The sensor 28 is through wires 29 connected to an electric motor 30 which, through a shaft 31, drives a screw conveyor 32 in the bottom of the storage tank 11, see Fig. 3. The screw conveyor 32 carries material towards the centre of the storage tank. When the high pressure blower 16 is working, a strong air flow is directed through an injector 33 mounted in the hose 18.

When the level of the material in the dosing tank 26 has dropped below the level of the sensor 28 a preset time-delayed signal is emitted to the electric motor 30. This rotates the screw conveyor 32 whereby the injector 33 is supplied with material.

A sensor 34 is mounted in the hose 18 immediately before the cyclone 27. The sensor 34 registrates whether the air velocity and the air pressure in the hose 18 is sufficient for transporting material. If this is not the case the motor 30 is not started. The air velocity and air pressure may e.g. be insufficient due to the motor revolution number. When the air velocity and air pressure are sufficient in the hose 18, the sensor 34 will emit a signal which makes it possible to start the electric motor 30.

The material transport capacity when using the screw conveyor 32 and the high pressure blower 16 through the hose 18 from the storage tank 11 to the dosing tank 26 is so arranged that an exess capacity always exists even when the sowing machine is set for maximum supply and at maximum driving speed. Thus when material is present in the storage tank 11 there will also be material in the dosing tank 26. The material transport is supervised on a display (not shown) intended to be mounted in the cabin of the tractor 9. This display indicates among other things whether the motor 30 is activated or not, whether the sensors 28,34 emit a signal or not or whether a level sensor in the storage tank 11 indicates that a low level is reached, etc.

As shown in Fig. 4 the hoses 18,19 are connected to the air distributor 17 below the storage tank 11. From here the hoses 18,19 extend obliquely forwards and upwards. The hoses pass above the top of the storage tank 11 to the rear towards the cyclone 27 and the dosing apparatus 20, respectively.

Two alternative courses for the hoses 18,19 are illustrated in Fig. 4. From this it will appear that the hoses pass approximately along a vertical axis 10' passing through the towing joint 10. This is a very advantageous feature of the machine as easy coupling of the towed part of the machine and the lift-suspended part is hereby achived. The hoses are arranged so as to be able to turn substantially about the vertical axis through the towing joint 10 of the towing bar 8. In this way substantially no variations in length of the hoses occur. If the hoses 18,19 were instead pointed directly to the rear towards the cyclone 27 and the dosing apparatus 20, respectively, a considerable length of excess hose should have been provided to permit sharp turnings with the set of implements or alternatively telescopic tubes should be used.

The advantages obtained during turning appear clearly from Fig. 5. During turning of the tractor 9 the storage tank 11 will also describe a turning movement across the towing bar 8. Seen from the towing joint 10, each point on the storage tank 11 will thus describe a circular arc across the towing bar 8. This circular arc will have a radius corresponding to the distance of the point from the vertical axis 10' through the towing joint 10. Thus as seen from the harrow 1, the distance from any point on the harrow 1 to a point on the storage tank 11 will change in length when the tractor 9 turns. Only in the vertical axis 10' through the towing joint 10 no change in length occurs between the storage tank 11 or the elements connected to this and the harrow 1 no matter the turning of the tractor. As the hoses 18,19 extend in the immediate vicinity of the vertical axis 10' they are subjected to a substantially insignificant change of length during turning.

Fig. 4 shows that the hoses 18,19 are suspended in a gallows 35. The vertical part 36 of the gallows 35 is pivotally supported in a bearing 37 mounted substantially about the vertical axis 10'. The gallows 35 comprises a substantially horizontal rail 38. The hoses 18,19 are mounted in a holder 39 which by means of rolls 40 are able to slide forwards and backwards in the rail 38. Hereby it becomes possible to neutralize small displacements during the turning of the tractor and it also becomes possible to neutralize those variations in length and those displacements which occur when the tractor drives over rough ground and hollows. As the gallows 35 rotates substantially about the vertical axis 10' the hoses 18,19 mounted in the holder 39 will almost always be in the same vertical plane comprising the towing bar 8 and thus they will always be orientated substantially rectilinearly (as seen from above) towards the cyclone 27 and the dosing apparatus 20, respectively. The hoses 18,19 are conveniently provided with hose couplings 41 permitting an easy assembly and separation. Instead of hoses between the couplings 41, and the cyclone and the dosing apparatus stiff tubes may be used instead which are firmly mounted on the frame of the harrow.

The mounting of the storage tank 11 in the lift suspension 14,15 of the tractor permits easy filling. Besides, it becomes possible to carry a large amount of material without any adverse effects on the weight distribution of the tractor. Furthermore, the modest volume of the dosing device 12 will permit easy folding of the harrow section and the sowing section each of which are constituted by a central part and two pivotally supported side wings which may be swung up hydraulically on each side of the dosing device for transport or storage.

It is evident that mechanical conveyors as e.g. a worm conveyor or a chain conveyor may be used instead of a pneumatic conveyer.

## Claims

1. Agricultural machine drawable by a tractor (9) and comprising a harrow and sowing device preferably with a working width ranging from 4 to 8 metres where the sowing shares (13) are mounted on the frame 2 of the harrow section for sowing immediately behind the harrow section which sowing shares are fed by a pneumatic dosing device (12) mounted at the rear of the harrow section in the immediate vicinity of the sowing shares, **characterized** in that the harrow section comprises a towing bar (8) designed to be coupled to the tractor via a towing joint (10), that the storage tank (11) of the sowing section is designed to be mounted in the three-point suspension (14,15) of the tractor and that the storage tank (11) is connected to the dosing device (12) via transport means (16,17,18,27,32) of which at least a part (18) extends approximately coaxially with or pivotally about a vertical axis 10' through the towing joint (10) of the towing bar (8).

2. Agricultural machine according to claim 1, **characterized** in that the harrow section and the sowing section comprise a central part and two pivotally supported side wings which may be swung up automatically for transport or storage.

3. Agricultural machine according to claim 1 or 2, **characterized** in that the transport means comprise a pneumatic conveyor (18) and that the part of the conveyor which is arranged so as to be able to rotate about the vertical axis (10') through the towing joint (10) of the towing bar at least is partially flexible and extends forwards and upwards from the bottom of the storage tank (11) and thereafter extends to the rear above the storage tank substantially in the vertical plane which comprises the towing bar (8) of the harrow section.

4. Agricultural machine according to claim 3, **characterized** in that the pneumatic dosing device (12) is fed with air from a high pressure blower (16) mounted at the rear of the storage tank and driven by means of the power take-off of the tractor and which, via an air distributor (17), delivers air both to the dosing device (12) through an at least partially flexible air hose (19) and to the pneumatic conveyor (18) and that the hose (19) and the conveyor (18) extend parallel and adjacent to each other along the major part of their length.

5. Agricultural machine according to claim 3 or 4, **characterized** in that the conveyor and the air hose are mounted in a holder (39) suspended in a pivotally supported (at 37) gallows (35) mounted on the storage tank for rotation about a vertical axis adjacent to the axis (10') through the towing joint of the towing bar and that the horizontal beam of the gallows (35) comprises a guide track (38) for rolls (40) mounted on the holder (39)

6. Agricultural machine according to anyone of the preceding claims, **characterized** in that the transport means comprise a screw conveyor (32) mounted in the bottom of the storage tank (11) and carrying seeds into the path for the following transport means (18) and that the screw conveyor (32) is activated by a signal from a level sensor 28 mounted in the dosing device (12) and a signal from a sensor (34) indicating the air velocity in a pneumatic conveyor (18).

7. Agricultural machine according claim 6, **charac-**

**terized** in that the function of the transport means is registered on a control board mounted in the cabin of the tractor.

8. Agricultural machine according to anyone of the preceding claims, **characterized** in that the part of the conveyor extending from the bottom of the storage tank, forwards, upwards and backwards above the storage tank and the adjacent air hose are constituted of flexible hoses describing a soft curve as seen from the side and that these hoses via quick couplings (41) are connected to stiff tubes mounted on the harrow section.

9. Agricultural machine according to claim 8, **characterized** in that the vertical axis (10') through the towing joint (10) of the towing bar forms a cord for the soft curve as seen from the side.

10. Agricultural machine according to anyone of the preceding claims, **characterized** in that the sowing section and the harrow section may optionally be brought into an active or an inactive position so that the machine may optionally be arranged as a harrow only or as a sowing machine only.

**Patentansprüche**

1. Landwirtschaftliche Maschine, die von einer Zugmaschine (9) gezogen werden kann und die eine Egge und ein Sägerät aufweist, dessen Arbeitsbreite vorzugsweise von 4 bis 8 Meter reicht, wo die Samenzuteiler (13) am Rahmen (2) des Eggenabschnitts gelagert sind, um unmittelbar hinter dem Eggenabschnitt zu säen, wobei die Samenzuteiler von einer pneumatischen Dosiereinrichtung (12) beliefert werden, die an der Rückseite des Eggenabschnitts in unmittelbarer Nachbarschaft der Samenzuteiler angeordnet ist, dadurch **gekennzeichnet,** daß der Eggenabschnitt eine Zugstange (8) umfaßt, die über eine Anhängerkupplung (10) mit der Zugmaschine kuppelbar ist, daß der Vorratsbehälter (11) des Säabschnitts in der Dreipunktaufhängung (14,15) der Zugmaschine anbringbar ist und daß der Vorratsbehälter (11) mit der Dosiereinrichtung (12) über Fördermittel (16,17,18-27,32,) verbunden ist, von denen sich zumindest ein Teil (18) näherungsweise koaxial zu einer vertikalen Achse (10') durch den Anlenkpunkt (10) der Zugstange (8) erstreckt oder um diese verschwenkbar ist.

2. Landwirtschaftliche Maschine nach Anspruch 1, dadurch **gekennzeichnet,** daß der Eggenabschnitt und der Säabschnitt ein mittleres Teil und zwei schwenkbar abgestützte Seitenflügel umfaßt, die zum Transport oder zur Aufbewahrung automatisch nach oben schwenkbar sind.

3. Landwirtschaftliche Maschine nach Anspruch 1 oder 2, dadurch **gekennzeichnet,** daß die Fördermittel einen pneumatischen Förderer (18) umfassen, und daß derjenige Teil des Förderers, der um die durch den Anlenkpunkt (10) der Zugstange hindurchgehende vertikale Achse (10′) verdrehbar ist, zumindest teilweise flexibel ist und sich von der Unterseite des Vorratsbehälters (11) nach vorne und nach oben und sodann im wesentlichen in der die Zugstange (8) des Eggenabschnitts enthaltenden vertikalen Ebene über dem Vorratsbehälter nach hinten erstreckt.

4. Landwirtschaftliche Maschine nach Anspruch 3, dadurch **gekennzeichnet,** daß die pneumatische Dosiereinrichtung (12) mit Luft von einem hochdruckgebläse (16) beliefert wird, das an der Rückseite des Vorratsbehälters angeordnet ist und von der Zapfwelle der Zugmaschine angetrieben wird und das Luft über einen Luftverteiler (17) sowohl der Dosiereinrichtung (12) über einen zumindest teilweise flexiblen Luftschlauch (19) als auch dem pneumatischen Förderer (18) zuführt und daß sich der Schlauch (19) und der Förderer (18) über den überwiegenden Teil ihrer Länge eng nebeneinander parallel erstrecken.

5. Landwirtschaftliche Maschine nach Anspruch 3 oder 4, dadurch **gekennzeichnet,** daß der Förderer und der Luftschlauch in einem Halter (39) gelagert sind, der an einem schwenkbar aufgehängten (bei 37) Galgen (35) gelagert ist, wobei der Galgen auf dem Vorratsbehälter zu einer Verdrehung um eine vertikale Achse nahe der durch den Anlenkpunkt der Zugstange hindurchgehenden Achse (10′) gelagert ist, und daß der horizontale Ausleger des Galgens (35) eine Führungsspur (38) für an dem dem Halter (39) angeordnete Rollen (40) aufweist.

6. Landwirtschaftliche Maschine nach einem der vorhergehenden Ansprüche, dadurch **gekennzeichnet,** daß die Fördermittel einen Schneckenförderer (32) umfassen, der im Boden des Vorratsbehälters (11) gelagert ist und Samenkörner in die Bahn für die nachfolgenden Fördermittel (11) bewegt, und daß der Schneckenförderer (32) durch ein Signal von einem in der Dosiereinrichtung (12) angeordneten Füllhöhensensor (28) und durch ein Signal von einem die Luftgeschwindigkeit in einem pneumatischen Förderer (18) anzeigenden Sensor (34) gesteuert wird.

7. Landwirtschaftliche Maschine nach Anspruch 6, dadurch **gekennzeichnet,** daß die Arbeitsweise der Fördermittel auf einer in der Kabine der Zugmaschine angeordneten Steuertafel angezeigt wird.

8. Landwirtschaftliche Maschine nach einem der vorhergehenden Ansprüche, dadurch **gekennzeichnet,** daß derjenige Teil des Förderers, der sich von der Unterseite des Vorratsbehälters nach vorne, nach oben und über dem Vorratsbehälter nach hinten erstreckt, und der benachbarte Luftschlauch aus flexiblen Schläuchen bestehen, die in der Seitenansicht eine sanfte kurve beschreiben, und daß diese Schläuche über Schnellkupplungen (41) mit an dem Eggenabschnitt angeordneten steifen Rohren verbunden sind.

9. Landwirtschaftliche Maschine nach Anspruch 8, dadurch **gekennzeichnet,** daß die durch den Anlenkpunkt (10) der Zugstange hindurchgehende vertikale Achse (10′) in der Seitenansicht eine Sehne für die sanfte Kurve bildet.

10. Landwirtschaftliche Maschine nach einem der vorhergehenden Ansprüche, dadurch **gekennzeichnet,** daß der Säabschnitt und der Eggenabschnitt wahlweise in eine wirksame oder unwirksame Stellung bringbar sind, so daß die Maschine wahlweise als reine Egge oder als reine Sämaschine ausgebildet sein kann.

## Revendications

1. Engin agricole pouvant être tiré par un tracteur (9) et comprenant un dispositif à herse et à semoir avec de préférence une marge de largeur de travail allant de 4 à 8 mètres, dans lequel les socs d'ensemencement (13) sont montés sur le cadre 2 de la partie de hersage pour semer immédiatement derrière la partie à herse, lesquels socs d'ensemencement sont alimentés par un dispositif de dosage pneumatique (12) monté à l'arrière de la partie à herse à proximité immédiate des socs d'ensemencement, caractérisé en ce que la partie à herse comprend une barre de remorquage (8) conçue pour être accouplée au tracteur par l'intermédiaire d'une articulation de remorquage (10), en ce que le bac de stockage (11) de la partie d'ensemencement est conçu pour être monté dans la suspension à trois points (14, 15) du tracteur et en ce que le bac de stockage (11) est relié au dispositif de dosage (12) par l'intermédiaire de moyens de transport (16, 17, 18, 27, 32) dont au moins une partie (18) s'étend approximativement de façon coaxiale à un axe vertical (10′) passant par l'articulation de remorquage (10) de la barre de remorquage (8) ou s'étend de façon à pouvoir pivoter autour de cet axe.

2. Engin agricole selon la revendication 1, caractérisé en ce que la partie à herse et la partie d'ensemencement comprennent une partie centrale et deux ailes latérales, supportées de façon à pouvoir pivoter, qui peuvent être relevées automatiquement pour le transport ou le rangement.

3. Engin agricole selon la revendication 1 ou 2, caractérisé en ce que les moyens de transport comprennent un transporteur pneumatique (18) et en ce que la partie du transporteur qui est disposée de façon à pouvoir pivoter autour de l'axe vertical (10') passant par l'articulation de remorquage (10) de la barre de remorquage au moins est en partie flexible et s'étend en avant et vers le haut à partir du fond du bac de stockage (11) et s'étend ensuite l'arrière au-dessus du bac de stockage sensiblement dans le plan vertical qui comprend la barre de remorquage (8) de la partie à herse.

4. Engin agricole selon la revendication 3, caractérisé en ce que le dispositif de dosage pneumatique (12) est alimenté en air à partir d'une soufflerie à haute pression (16) montée à l'arrière du bac de stockage et entraînée au moyen de la prise de force du tracteur et qui, par l'intermédiaire d'un distributeur d'air (17), délivre de l'air au dispositif de dosage (12) à travers un tuyau à air flexible au moins en partie et au transporteur pneumatique (18), et en ce que le tuyau (19) et le transporteur (18) s'étendent parallèlement et de façon adjacente l'un à l'autre le long de la plus grande partie de leur longueur.

5. Engin agricole selon les revendications 3 ou 4, caractérisé en ce que le transporteur et le tuyau à air sont montés dans un support (39) suspendus à une potence (35), supportée de façon à pivoter (en 37), montée sur le bac de stockage pour obtenir une rotation autour d'un axe vertical adjacent à l'axe (10') passant par l'articulation de la barre de remorquage et en ce que la poutre horizontale de la potence (35) comprend un rail de guidage (38) pour des galets (40) montés sur le support (39).

6. Engin agricole selon l'une quelconque des revendications précédentes, caractérisé en ce que les moyens de transport comprennent un transporteur à vis (32) monté dans le fond du bac de stockage (18) et transportant des graines dans la trajectoire pour les moyens de transport suivants (18) et en ce que le transporteur à vis (32) est actionné par un signal issu d'un capteur de niveau (28) monté dans le dispositif de dosage (12) et un signal issu d'un capteur (34) indiquant la vitesse de l'air dans un transporteur pneumatique (18).

7. Engin agricole selon la revendication 6, caractérisé en ce que le fonctionnement des moyens de transport est enregistré sur un pupitre de commande monté dans la cabine du tracteur.

8. Engin agricole selon l'une quelconque des revendications précédentes, caractérisé en ce que la partie du transporteur s'étendant à partir du fond du bac de stockage, à l'avant, vers le haut et vers l'arrière au-dessus du bac de stockage et le tuyau d'air adjacent sont constitués de tuyaux flexibles décrivant une courbe peu accentuée vue de côté et en ce que les tuyaux sont reliés par l'intermédiaire de moyens d'assemblages rapides (41), à des tubes rigides montés sur la partie de hersage.

9. Engin agricole selon la revendication 8, caractérisé en ce que l'axe vertical (10') passant par l'articulation de remorquage (10) de la barre de remorquage forme une corde pour la courbe peu accentuée vue de côté.

10. Engin agricole selon l'une quelconque des revendications précédentes, caractérisé en ce que la partie d'ensemencement et la partie à herse peuvent être mises en position active ou inactive de façon optionnelle de sorte que l'engin peut être de façon optionnelle disposé seulement en herse ou seulement en semoir.

**FIG. 1**

EP 0 404 927 B1

FIG. 2

FIG. 3

EP 0 404 927 B1

FIG. 4

FIG. 5

10